# EUROPEAN PATENT APPLICATION

(11) **EP 4 793 696 A1**
(43) Date of publication of application: **19.08.2026**
(21) Application number: 24877169.3
(22) Date of filing: 08.10.2024
(51) Int. Cl.: G02F 1/1339, C03C 27/12, G02F 1/1333, G02F 1/1335

(54) **LIGHT CONTROL FILM AND LAMINATED GLASS**

(30) Priority: 12.10.2023 JP 2023176828
(71) Applicant: AGC Inc., Chiyoda-ku Tokyo 100-8405 (JP); Toppan Holdings Inc., Tokyo 110-0016 (JP)
(72) Inventor: SUMI, Yukihiro, Tokyo 100-8405 (JP); GIMA, Yuhei, Tokyo 100-8405 (JP); SHIRAISHI, Ryuji, Tokyo 110-0016 (JP); NAKAMURA, Gen, Tokyo 110-0016 (JP)
(74) Representative: TBK
(86) International application number: PCT/JP2024/035931
(87) International publication number: WO 2025/079574

(57) **Abstract**

Provided is a light control film including a light control laminate including a first electrode sheet, a light control layer and a second electrode sheet in this order, and a sealing material at an outer edge portion of the light control laminate, in which the light control laminate includes a first extension portion in which the second electrode sheet is located outside an outer edge of the light control layer in plan view, a surface of the second electrode sheet on a side of the light control layer at the first extension portion is a first main surface, the sealing material contacts at least a side surface of the first electrode sheet, a side surface of the light control layer and a first main surface of the second electrode sheet at the first extension portion and a periphery of the first extension portion, and has a thickness T1 to the light control laminate from a surface of the sealing material, which includes a location farthest from the light control laminate, at a location overlapping an outer edge of the first electrode sheet in plan view, and the thickness T1 is 40 µm or more.

## Description

### Technical Field

The present invention relates to a light control film and laminated glass.

### Background Art

A light control film including a light control layer in which a light-transmitting state is changed by electrical control is known. For example, the light control film includes a liquid crystal layer as a light control layer held between electrodes, in which by a voltage applied to the electrodes, an orientation state of liquid crystal molecules contained in the liquid crystal layer can be changed to switch between a light-shielding state in which incident light is scattered and a light-transmitting state in which incident light is transmitted. Such a light control film is used, for example, by being sealed in an intermediate adhesive layer of laminated glass.

In laminated glass including a light control film, the light control layer may be degraded by moisture, components of an intermediate adhesive layer, and the like. To address this, a structure in which a sealing material is provided to protect a light control layer in a light control film has been proposed (see, for example, Patent Literature 1).

### Citation List

### Patent Literature

[Patent Literature 1] Japanese Unexamined Patent Application Publication No. 2019-191480

### Summary of Invention

### Technical Problem

However, even in a light control film including a sealing material, a light control layer may degrade with time, and improvement of a sealing property for the light control layer is required.

The present invention has been made in view of the above circumstances, and an object of the present invention is to improve the sealing property of a sealing material that protects a light control layer in a light control film.

### Solution to Problem

A light control film according to an embodiment of the disclosure includes a light control laminate including a first electrode sheet, a light control layer and a second electrode sheet in this order, and a sealing material at an outer edge portion of the light control laminate, in which the light control laminate includes a first extension portion in which the second electrode sheet is located outside an outer edge of the light control layer in plan view, a surface of the second electrode sheet on a side of the light control layer at the first extension portion is a first main surface, the sealing material contacts at least a side surface of the first electrode sheet, a side surface of the light control layer and a first main surface of the second electrode sheet at the first extension portion and a periphery of the first extension portion, and has a thickness T1 to the light control laminate from a surface of the sealing material, which includes a location farthest from the light control laminate, at a location overlapping an outer edge of the first electrode sheet in plan view, and the thickness T1 is 40 µm or more.

### Advantageous Effects of Invention

According to an embodiment of the disclosure, in a light control film, the sealing property of a sealing material that protects the light control layer can be improved.

### Brief Description of Drawings

Fig. 1 is a view illustrating a light control film according to a first embodiment;
Fig. 2 is a view illustrating a light control film according to a modified example of the first embodiment;
Fig. 3 is a view illustrating laminated glass according to a second embodiment;
Fig. 4 is a view illustrating laminated glass according to a modified example of the second embodiment; and
Fig. 5 is a diagram showing the results of evaluating the sealing property and lamination compatibility.

### Description of Embodiments

Hereinafter, embodiments of the invention will be described with reference to the drawings. In the drawings, the same components are denoted by the same reference signs, and overlapping explanations may be omitted. In the drawings, some parts may be exaggerated in size and shape for easy understanding of the contents of the present invention.

The term "plan view" means that a target is viewed in a direction of a normal line passing through the center of gravity of the main surface of the target, and the shape seen at that time is referred to as a planar shape.

An edge of a predetermined member on an outer side in plan view is referred to as an "outer edge", and a region contacting the "outer edge" and having a width in the predetermined member is referred to as an "outer edge portion". In a case where the predetermined member has an edge on an inner side which is located on a side opposite to the outer edge in plan view, the edge of the predetermined member on the inner side in plan view is referred to as an "inner edge", and a region contacting the "inner edge" and having a width in the predetermined member is referred to as an "inner edge portion". With respect to the center (for example, the center of gravity) of a target, a direction in which the distance from the center increases is defined as the outer side, and a direction in which the distance from the center decreases is defined as the inner side.

### <First Embodiment>

### [Light control film]

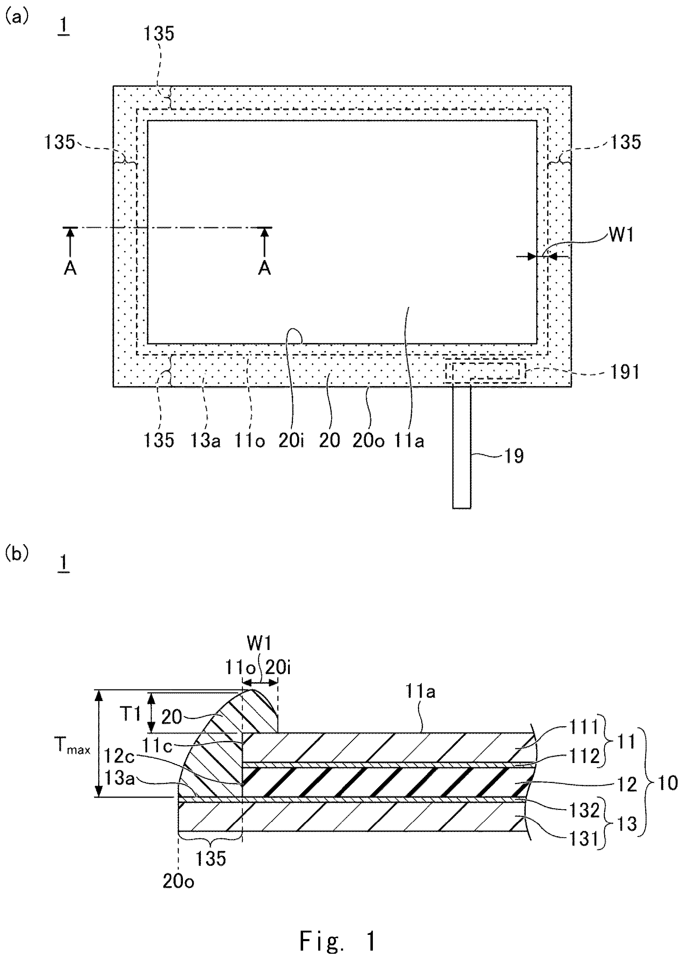

Fig. 1 is a view illustrating a light control film according to a first embodiment. Fig. 1(a) is a view schematically showing a state of the light control film viewed in a normal direction of a main surface of a first electrode sheet, and Fig. 1(b) is a partially enlarged cross-sectional view taken along line A-A of Fig. 1(a).

As shown in Fig. 1, a light control film 1 includes a light control laminate 10 and a sealing material 20. The light control film 1 is an element in which the visible light transmittance can be changed by applying a voltage. In the example of Fig. 1, the light control film 1 has a rectangular shape in plan view. The size of the light control film 1 (longitudinal length and lateral length in plan view) is appropriately determined according to the application. The thickness of the light control film 1 is, for example, 0.1 mm or more and 1 mm or less. The thickness of the light control film 1 may be 0.8 mm or less, or may be 0.5 mm or less. The thickness of the light control film 1 may be 0.3 mm or more.

The light control laminate 10 includes a laminated first electrode sheet 11, light control layer 12 and second electrode sheet 13 in this order. That is, the light control layer 12 is sandwiched between the first electrode sheet 11 and the second electrode sheet 13. The light control laminate 10 may include necessary layers in addition to the first electrode sheet 11, the light control layer 12 and the second electrode sheet 13.

The first electrode sheet 11 includes a first substrate 111, and a first conductive film 112 formed on a main surface of the first substrate 111 on the light control layer 12 side. The second electrode sheet 13 includes a second substrate 131, and a second conductive film 132 formed on a main surface of the second substrate 131 on the light control layer 12 side. That is, the light control layer 12 is sandwiched between the first conductive film 112 and the second conductive film 132, the first conductive film 112 contacts one main surface of the light control layer 12, and the second conductive film 132 contacts the other main surface of the light control layer 12.

The first substrate 111 and the second substrate 131 are transparent resin layers. The thickness of each of the first substrate 111 and the second substrate 131 is, for example, 5 µm or more and 500 µm or less. The first substrate 111 and the second substrate 131 can be formed from, for example, any selected from the group of polyethylene terephthalate, polyethylene naphthalate, polyamide, polyether, polysulfone, polyether sulfone, polycarbonate, polyarylate, polyether imide, polyether ether ketone, polyimide, aramid, polybutylene terephthalate, triacetyl cellulose, polyurethane, and cycloolefin polymer.

The first conductive film 112 and the second conductive film 132 are transparent conductive films. For the first conductive film 112 and the second conductive film 132, for example, a transparent conductive oxide (TCO) can be used. Examples of the TCO include, but are not limited to, tin-doped indium oxide (ITO), aluminum-doped zinc oxide (AZO), and indium-doped cadmium oxide.

The light control layer 12 includes, for example, at least one selected from the group consisting of a suspended particle device, a polymer dispersed liquid crystal, a polymer network liquid crystal, a guest-host liquid crystal, an electrochromic device, a photochromic device, and an electrokinetic device. The light control layer 12 preferably includes any selected from the group of a suspended particle device, a polymer dispersed liquid crystal, a polymer network liquid crystal, a guest-host liquid crystal, and an electrochromic device.

The thickness of the light control layer 12 is, for example, 5 µm or more and 300 µm or less. The thickness of the light control layer 12 may be 10 µm or more, 15 µm or more, or 20 µm or more. The thickness of the light control layer 12 may be 200 µm or less, 150 µm or less, or 100 µm or less.

The first conductive film 112 of the first electrode sheet 11 and the second conductive film 132 of the second electrode sheet 13 each include a wiring portion 191 to which wiring 19 is electrically connected. The wiring 19 may be, for example, a flexible substrate, a metal foil, or the like. When a voltage is applied from a power source such as a battery to the first conductive film 112 and the second conductive film 132 through the wiring 19, the visible light transmittance of the light control layer 12 is changed according to the applied voltage. The wiring portion 191 is located, for example, at a first extension portion 135 which will be described later. The wiring portion 191 connected to the first conductive film 112 and the wiring portion 191 connected to the second conductive film 132 may be provided on different sides of the light control laminate 10 in plan view.

The light control laminate 10 includes the first extension portion 135 in which the second electrode sheet 13 is located outside the outer edge of the light control layer 12 in plan view. The first extension portion 135 is provided, for example, in a frame shape outside the outer edge of the light control layer 12. The widths of the first extension portions 135 located outside the sides of the light control layer 12 in plan view may be the same or different. For example, the width of the first extension portion 135 in which the wiring 19 is arranged may be larger than the width of the first extension portion 135 in which the wiring 19 is not arranged. Accordingly, the wiring portion 191 and the wiring 19 are easily connected. For example, the width of the first extension portion 135 in which the wiring 19 is arranged is 3 mm or more and 15 mm or less, and the width of the first extension portion 135 in which the wiring 19 is not arranged is 0.5 mm or more and 15 mm or less.

The sealing material 20 seals the outer edge portion of the light control laminate 10. The sealing material 20 is formed of a transparent resin and has, for example, a mountain shape in a cross-sectional view. The sealing material 20 can be formed by using, for example, any of various resin materials of heat-curable type, photocurable type, moisture-curable type, anaerobically curable type and the like from various types of resins such as epoxy-based resins, urethane-based resins, acrylic-based resins, vinyl acetate-based resins, ene-thiol-based resins, silicone-based resins, and modified polymers. Specific examples of the sealing material 20 include those prepared as a photocurable resin liquid containing a polythiol compound, a polyene compound having two or more carbon-carbon double bonds in one molecule, and a photopolymerization initiator.

The sealing material 20 contacts at least a side surface 11c of the first electrode sheet 11, a side surface 12c of the light control layer 12, and a main surface 13a of the second electrode sheet 13 at the first extension portion 135 and the periphery of the first extension portion 135. The sealing material 20 preferably contacts the main surface 11a of the first electrode sheet 11 at the inner periphery of the first extension portion 135. The term "the inner periphery of the first extension portion 135" refers to a portion which includes an outer edge 11o of the first electrode sheet 11 and is located inside the outer edge 11o (that is, the outer edge portion of the first electrode sheet 11) in Fig. 1(a). In the example of Fig. 1, the outer edge 11o of the first electrode sheet 11 coincides with the outer edge of the light control layer 12.

Moisture, components (for example, a plasticizer) of the intermediate adhesive layer, and the like, which cause degradation of the light control layer 12, are likely to enter the inside of the light control layer 12 from the outer edge of the light control layer 12. To address this, the sealing material 20 contacts the main surface 11a of the first electrode sheet 11 at the periphery of the first extension portion 135, and thus, the sealing material 20 is provided immediately above the outer edge of the light control layer 12, so that entry of moisture, components of the intermediate adhesive layer, and the like into the light control layer 12 can be effectively suppressed. That is, the sealing property for the light control layer 12 can be improved.

A width W1 of a region in which the sealing material 20 contacts the main surface 11a of the first electrode sheet 11, that is, the width W1 between the outer edge 11o of the first electrode sheet 11 and the inner edge 20i of the sealing material 20 is preferably 0.5 mm or more. Accordingly, the sealing property for the light control layer 12 can be further improved. For obtaining a similar but more remarkable effect, the width W1 is more preferably 0.8 mm or more, still more preferably 1.0 mm or more, and particularly preferably 1.5 mm or more. The upper limit of the width W1 is not particularly limited, but may be, for example, 300 mm or less, 200 mm or less, or 100 mm or less.

The sealing material 20 has a thickness T1 to the light control laminate 10 from a surface of the sealing material 20, which includes a location farthest from the light control laminate 10, at a location overlapping the outer edge 11o of the first electrode sheet 11 in plan view. The thickness T1 is 40 µm or more.
There is a possibility that the thickness T1 does not coincide with the thickness from the main surface 11a of the first electrode sheet 11 to the thickest portion of the sealing material 20. That is, there is a possibility that the thickest portion of the sealing material 20 is not located on the outer edge 11o of the first electrode sheet 11.

In a case where the thickness T1 is 40 µm or more, it is possible to suppress entry of moisture and the like to the light control layer 12 side due to breakage of the sealing material 20. That is, the sealing property for the light control layer 12 can be improved. In particular, it is possible to suppress degradation of the light control layer 12 with time in a case where the light control film 1 is stored for a long time in a harsh environment such as a high-temperature environment. As a result, the width of degradation proceeding inward from the outer edge of the light control layer 12 in plan view can be narrowed. Therefore, in a case where a shielding layer 340 is provided as in laminated glass 300A which will be described later, the width of the shielding layer 340 necessary for hiding a degraded portion of the light control layer 12 can be narrowed. For obtaining a similar but more remarkable effect, the thickness T1 is preferably 60 µm or more, more preferably 80 µm or more, and still more preferably 100 µm or more.

As will be described later, for producing laminated glass, a first intermediate adhesive layer, a light control film and a second intermediate adhesive layer are sandwiched between a first glass plate and a second glass plate to obtain a laminate. The laminate is put into a resin bag or the like, and preliminary pressure bonding is performed by applying heat while decompressing (degassing) the inside of the resin bag or the like. If there is a portion having a large thickness variation, the degassing property deteriorates and air bubbles remain in the intermediate adhesive layer during degassing, resulting in occurrence of a defect in appearance.

Thus, the thickness T1 is preferably 240 µm or less. Accordingly, the thickness variation does not increase at the periphery of a portion of the sealing material 20 which has the thickness T1, and thus, the degassing property can be secured, so that it is possible to suppress occurrence of a defect in appearance in laminated glass. For obtaining a similar but more remarkable effect, the thickness T1 is preferably 200 µm or less, more preferably 160 µm or less, and still more preferably 120 µm or less.

The sealing material 20 preferably has a region where the thickness increases in a direction from the peripheral edge portion of the second electrode sheet 13 toward the peripheral edge portion of the first electrode sheet 11 in cross-sectional view, and a region where the thickness decreases in a direction from the peripheral edge portion of the first electrode sheet 11 toward the inside of the first electrode sheet 11 (in the plane direction). In Fig. 1(b), the thickness of the sealing material 20 gradually increases in a direction from an outer edge 20o of the second electrode sheet 13 toward the outer edge 11o of the first electrode sheet 11 in cross-sectional view, and gradually decreases in a direction from the outer edge 11o of the first electrode sheet 11 toward the inner side. Accordingly, both the sealing property and the degassing property are easily secured. In Fig. 1 (b), the thickness of the sealing material 20 monotonically increases and decreases, but the present invention is not limited thereto, and there may be, for example, a partially flat region.

The distance from the main surface 13a of the second electrode sheet 13 to a main surface of the light control laminate 10 (here, the main surface 11a of the first electrode sheet 11) on the side of contact with the sealing material 20 is preferably small. Specifically, the distance from the main surface 13a of the second electrode sheet 13 to the main surface of the light control laminate 10 on the side of contact with the sealing material 20 is preferably 195 µm or less, more preferably 180 µm or less, and still more preferably 165 µm or less. The lower limit value is not particularly limited, but is for example, 50 µm. Accordingly, the thickness variation hardly increases at the periphery of a portion of the sealing material 20 which has the thickness T1, and the thickness T1 of the sealing material 20 is easily secured. The sealing material 20 is easily formed into a shape in which the thickness gradually increases from the outer edge 20o of the second electrode sheet 13 toward the outer edge 11o of the first electrode sheet 11 in cross-sectional view.

In the sealing material 20, the thickness that is the largest in a direction perpendicular to the main surface 13a of the second electrode sheet 13 with respect to the main surface 13a is a maximum thickness Tₘₐₓ. The maximum thickness Tₘₐₓ is preferably 185 µm or more. Accordingly, it is easy to sufficiently increase the thickness T1, and it is possible to suppress entry of moisture and the like to the light control layer 12 side due to breakage of the sealing material 20. The maximum thickness Tₘₐₓ is more preferably 200 µm or more, and still more preferably 220 µm or more. The maximum thickness Tₘₐₓ is preferably 495 µm or less. Accordingly, it is easy to reduce a level difference between the sealing material 20 and another member that contacts the sealing material 20, and the degassing property is easily secured. The maximum thickness Tₘₐₓ is more preferably 450 µm or less, still more preferably 400 µm or less, even more preferably 350 µm or less, and particularly preferably 300 µm or less.

### [Method for Producing Light Control Film]

For producing the light control film 1, first, the first electrode sheet 11 including a first substrate 111 and a first conductive film 112, the light control layer 12, and the second electrode sheet 13 including a second substrate 131 and a second conductive film 132 are prepared. The light control layer 12 is sandwiched between the first electrode sheet 11 and the second electrode sheet 13 such that the first conductive film 112 and the second conductive film 132 face each other with the light control layer 12 interposed therebetween. In this way, the light control laminate 10 is prepared.

Next, the first electrode sheet 11 and the light control layer 12 located at the outer edge portion of the light control laminate 10 in plan view are removed until the main surface 13a of the second electrode sheet 13 is exposed. Accordingly, the first extension portion 135 in which the second electrode sheet 13 is located outside the outer edge of the light control layer 12 in plan view is formed in the light control laminate 10. The first electrode sheet 11 and the light control layer 12 can be removed, for example, by wiping using an organic solvent.

Next, the wiring 19 formed of a metal foil or the like is prepared, and the wiring 19 is fixed to the wiring portion 191 defined in the first extension portion 135 in advance. The wiring 19 can be fixed by, for example, a conductive double-sided tape.

Next, an insulating resin is applied to the outer edge portion of the light control laminate 10 using a dispenser or the like, and the insulating resin is cured by heating, ultraviolet irradiation or the like to form the sealing material 20. By adjusting the location of application and the amount of application of the insulating resin, the sealing material 20 is formed such that the sealing material 20 contacts at least the side surface 11c of the first electrode sheet 11, the side surface 12c of the light control layer 12 and the main surface 13a of the second electrode sheet 13 at the first extension portion 135 and the periphery thereof, and the thickness T1 from the surface of the sealing material 20 to the light control laminate 10 is 40 µm or more at a location overlapping the outer edge of the first electrode sheet 11 in plan view. Thus, the light control film 1 is completed.

### [Modified Example of Light Control Film]

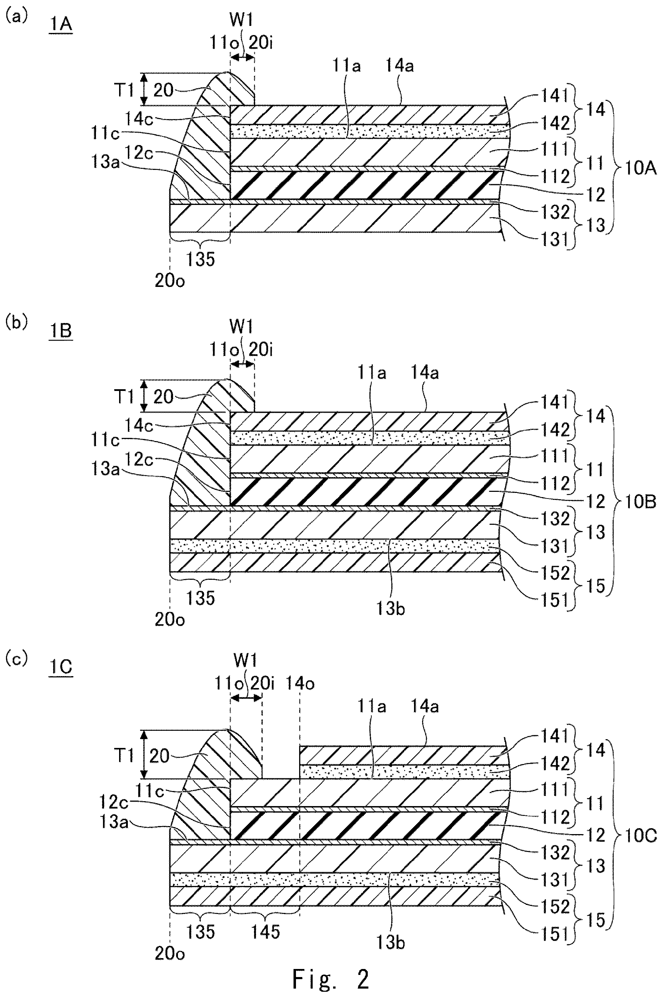

Figs. 2(a) to 2(c) are views illustrating a light control film according to a modified example of the first embodiment, and are partially enlarged cross-sectional views corresponding to Fig. 1(b).

A light control film 1A shown in Fig. 2(a) includes a light control laminate 10A and the sealing material 20. The light control laminate 10A is different from the light control laminate 10 of the light control film 1 (see Fig. 1(b)) in that a first ultraviolet absorption sheet 14 is provided on the first electrode sheet 11 on a side opposite to the light control layer 12. The first ultraviolet absorption sheet 14 is provided so as to contact the entire main surface 11a of the first electrode sheet 11, for example. The first ultraviolet absorption sheet 14 includes, for example, a protective substrate 141, and a pressure sensitive adhesive layer 142 that bonds the protective substrate 141 and the main surface 11a of the first electrode sheet 11. At least one of the protective substrate 141 and the pressure sensitive adhesive layer 142 contains an ultraviolet absorber.

The sealing material 20 contacts at least the side surface 11c of the first electrode sheet 11, the side surface 12c of the light control layer 12, a side surface 14c of the first ultraviolet absorption sheet 14 and the main surface 13a of the second electrode sheet 13 at the first extension portion 135. The sealing material 20 preferably contacts the main surface 14a of the first ultraviolet absorption sheet 14 at the inner periphery of the first extension portion 135. Accordingly, the sealing material 20 is provided immediately above the outer edge of the light control layer 12, so that entry of moisture, components of the intermediate adhesive layer, and the like into the light control layer 12 can be effectively suppressed. That is, the sealing property for the light control layer 12 can be improved. In the first extension portion 135, a width W1 of a region where the sealing material 20 overlaps the main surface 14a of the first ultraviolet absorption sheet 14 in plan view is preferably 1 mm or more. In the light control film 1A, preferred values of the thickness T1 and the maximum thickness Tₘₐₓ are the same as in the case of the light control film 1.

In the light control film 1A, degradation of the light control layer 12 by ultraviolet rays can be suppressed because the first ultraviolet absorption sheet 14 is provided on the first electrode sheet 11 on a side opposite to the light control layer 12.

A light control film 1B shown in Fig. 2(b) includes a light control laminate 10B and the sealing material 20. The light control laminate 10B is different from the light control laminate 10A of the light control film 1A (see Fig. 2(a)) in that a second ultraviolet absorption sheet 15 is provided on the second electrode sheet 13 on a side opposite to the light control layer 12. The second ultraviolet absorption sheet 15 is provided so as to contact the entire main surface 13b of the second electrode sheet 13, for example. The second ultraviolet absorption sheet 15 includes, for example, a protective substrate 151, and a pressure sensitive adhesive layer 152 that bonds the protective substrate 151 and the main surface 13b of the second electrode sheet 13. At least one of the protective substrate 151 and the pressure sensitive adhesive layer 152 contains an ultraviolet absorber.

In the light control film 1B, degradation of the light control layer 12 by ultraviolet rays can be further suppressed because the first ultraviolet absorption sheet 14 is provided on the first electrode sheet 11 on a side opposite to the light control layer 12, and the second ultraviolet absorption sheet 15 is provided on the second electrode sheet 13 on a side opposite to the light control layer 12. The light control film 1B may include the second ultraviolet absorption sheet 15 on the second electrode sheet 13 on a side opposite to the light control layer 12, with no first ultraviolet absorption sheet 14 on the first electrode sheet 11 on a side opposite to the light control layer 12. In the light control film 1B, preferred values of the thickness T1 and the maximum thickness Tₘₐₓ are the same as in the case of the light control film 1.

A light control film 1C shown in Fig. 2(c) includes a light control laminate 10C and the sealing material 20. The light control laminate 10C is different from the light control laminate 10B of the light control film 1B (see Fig. 2(b)) in that the first ultraviolet absorption sheet 14 includes a second extension portion 145 located inside the outer edge 11o of the first electrode sheet 11 in plan view.

The second extension portion 145 is provided on one or more sides of the light control laminate 10 in plan view, for example. The width of the second extension portion 145 is, for example, 0.5 mm or more and 300 mm or less. The second extension portion 145 may be provided on, among sides of the light control laminate 10, only sides including the wiring portion 191. The second extension portion 145 may be provided on all sides of the light control laminate 10 in plan view. In this case, the second extension portion 145 may have a frame shape in plan view.

By directing the second extension portion 145, the thickness of the entire light control film 1C can be made smaller than that of the light control film 1B while a required value of thickness T1 (40 µm or more) is secured. In the light control film 1C, the thickness variation at the periphery of a portion of the sealing material 20 which has the thickness T1 is smaller than that in the light control film 1B, and therefore, the degassing property is improved as compared to that of the light control film 1B.

The sealing material 20 contacts at least a side surface 11c of the first electrode sheet 11, a side surface 12c of the light control layer 12, and a main surface 13a of the second electrode sheet 13 at the first extension portion 135. The sealing material 20 preferably contacts the main surface 11a of the first electrode sheet 11 in the second extension portion 145 located at the inner periphery of the first extension portion 135. Accordingly, the sealing material 20 is provided immediately above the outer edge of the light control layer 12, so that entry of moisture, components of the intermediate adhesive layer, and the like into the light control layer 12 can be effectively suppressed. That is, the sealing property for the light control layer 12 can be improved. In the second extension portion 145, the width W1 of a region where the sealing material 20 overlaps the main surface 11a of the first electrode sheet 11 in plan view is preferably 1 mm or more. In the light control film 1C, preferred values of the thickness T1 and the maximum thickness Tₘₐₓ are the same as in the case of the light control film 1.

### <Second Embodiment>

In a second embodiment, laminated glass for vehicle which includes a light control film 1 according to the first embodiment will be described. The vehicle is typically an automobile, but refers to moving vehicles in which laminated glass can be mounted, such as trains, vessels, and aircrafts.

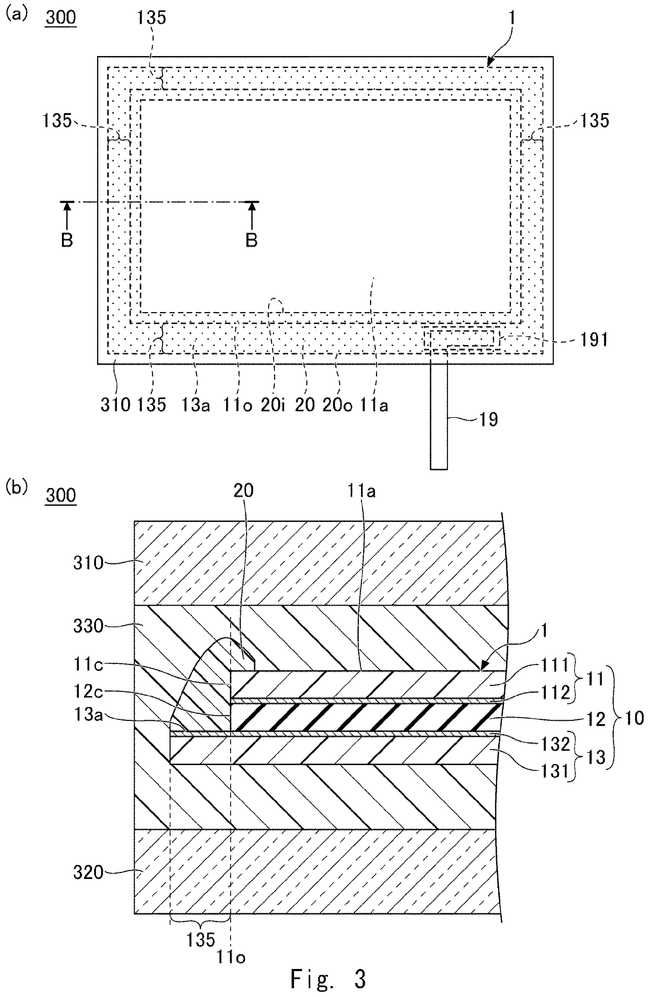

Fig. 3 is a view illustrating laminated glass according to the second embodiment. Fig. 3(a) is a view schematically showing a state of the laminated glass viewed in a normal direction of a first glass plate, and Fig. 3(b) is a partially enlarged cross-sectional view taken along line B-B of Fig. 3(a).

As shown in Fig. 3, laminated glass 300 is laminated glass for vehicle which includes a first glass plate 310, an intermediate adhesive layer 330, and a second glass plate 320 in this order, with the light control film 1 in the intermediate adhesive layer 330. The laminated glass 300 may include, in the intermediate adhesive layer 330, a light control film 1A, 1B or 1C instead of the light control film 1.

The laminated glass 300 can be used as a window glass for vehicle, a partition in a vehicle, or the like. The laminated glass 300 can be used as a window glass for vehicle, for example, for a windshield, a rear window, front side glass, rear side glass, a quarter window, a roof, and an extra window.

The first glass plate 310 and the second glass plate 320 are bonded with the intermediate adhesive layer 330 interposed therebetween. The first glass plate 310 is disposed on a first side which is a vehicle exterior side when the laminated glass 300 is attached to the vehicle, and the second glass plate 320 is disposed on a second side which is a vehicle interior side when the laminated glass 300 is attached to the vehicle.

In Fig. 3, the laminated glass 300 is illustrated by omitting an actual curved shape and simplifying the outside shape for convenience of explanation. However, the shape of the laminated glass 300 is not limited to a planar shape (non-curved shape) shown in Fig. 3, and may be a curved shape. The laminated glass 300 may have, for example, a single-curved shape which is curved in one of the perpendicular direction and the horizontal direction in an in-vehicle state, or a double-curved shape which is curved in both the perpendicular direction and the horizontal direction in an in-vehicle state. However, the single-curved shape and the double-curved shape are not limited to the shape which is curved in the perpendicular direction and/or the horizontal direction in an in-vehicle state.
The single-curved shape includes a shape which is curved in any one direction. The double-curved shape includes a shape which is curved in any two or more different directions.

In a case where the laminated glass 300 has a curved shape, the laminated glass 300 is preferably curved so as to be convex in a direction toward the vehicle exterior side. That is, the first glass plate 310 is preferably curved so as to be convex in a direction toward a side opposite to the intermediate adhesive layer 330, and the second glass plate 320 is preferably curved so as to be convex in a direction toward the intermediate adhesive layer 330 side. In Fig. 3(a), the laminated glass 300 has a substantially rectangular shape in plan view, but the shape of laminated glass 300 is not limited to a substantially rectangular shape, and may be any shape. The term "substantially" as used herein means that linearity, the number of corners, the size of corners, and the like are not required to be exact. The laminated glass 300 may have a substantially trapezoidal shape, a substantially triangular shape, or the like.

In a case where the laminated glass 300 has a curved shape, the minimum value of the curvature radius of the laminated glass 300 is preferably 500 mm or more and 100,000 mm or less. The curvature radii of the first glass plate 310 and the second glass plate 320 may be the same or different.

The first glass plate 310 and the second glass plate 320 are a pair of glass plates facing each other, and the intermediate adhesive layer 330 and the light control film 1 are located between the pair of glass plates. The first glass plate 310 and the second glass plate 320 are fixed with the intermediate adhesive layer 330 and the light control film 1 sandwiched therebetween. The intermediate adhesive layer 330 is a film that bonds the first glass plate 310 and the second glass plate 320. Details of the first glass plate 310, the second glass plate 320, and the intermediate adhesive layer 330 will be described later.

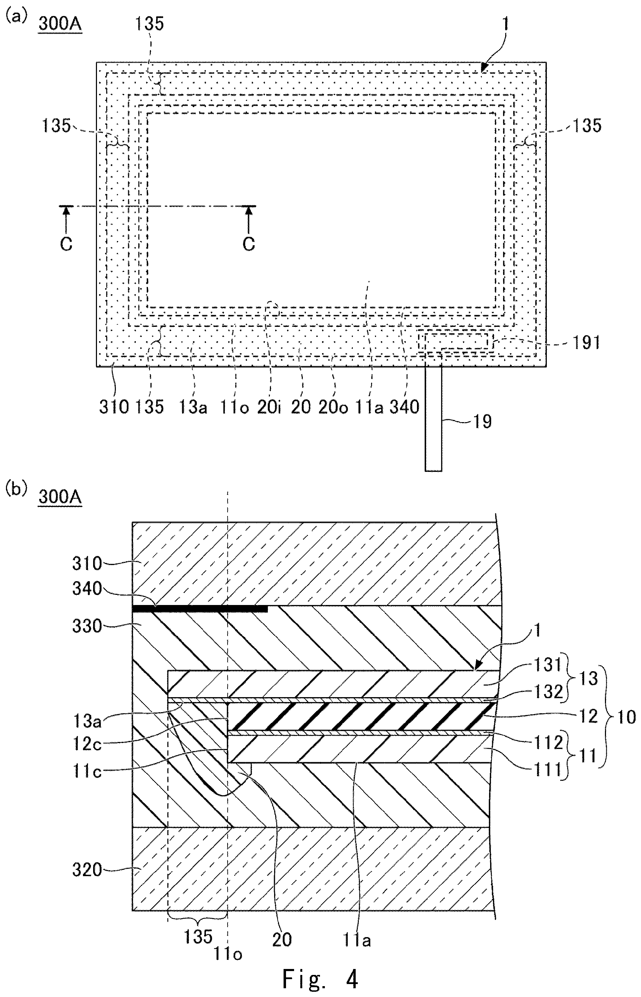

Fig. 4 is a view illustrating laminated glass according to a modified example of the second embodiment. Fig. 4(a) is a view schematically showing a state of the laminated glass viewed in a normal direction of a first glass plate, and Fig. 4(b) is a partially enlarged cross-sectional view taken along line C-C of Fig. 4(a).

As shown in Fig. 4, the laminated glass 300A is different from the laminated glass 300 (see Fig. 3) in that the shielding layer 340 is provided.

The laminated glass 300A includes the shielding layer 340 having a predetermined width from an outer edge of the first glass plate 310 in plan view on a surface of the first glass plate 310 on the vehicle interior side. The shielding layer 340 can be provided in a band shape on an outer edge portion of a surface of the first glass plate 310 on the vehicle interior side. The shielding layer 340 preferably overlaps the outer edge of a main surface of the light control laminate 10 on the first electrode sheet 11 side with respect to the light control layer 12 in plan view (that is, the outer edge 11o of the first electrode sheet 11). Accordingly, the outer edge 11o of the first electrode sheet 11 can be hidden. The shielding layer 340 preferably overlaps the entire sealing material 20 in plan view. Accordingly, degradation of the sealing material 20 by ultraviolet rays can be suppressed.

The shielding layer 340 is an opaque layer. The shielding layer 340 is, for example, an opaque colored ceramic layer, and the color is arbitrary, but dark color such as black, brown, gray, or deep blue is preferred, and black is more preferred. The shielding layer 340 can be formed by, for example, applying a ceramic color paste containing a meltable glass frit containing a black pigment onto a glass plate by screen printing or the like, followed by firing, but the present invention is not limited thereto.

In the laminated glass 300A shown in Fig. 4, the light control film 1 is sealed in the intermediate adhesive layer 330 with the sealing material 20 facing the second glass plate 320 side. The shielding layer 340 is provided on a surface of the first glass plate 310 on the vehicle interior side. By virtue of such a configuration, the sealing material 20 is easily protected from external impacts and ultraviolet. In a case where the second ultraviolet absorption sheet 15 is provided as in the light control films 1B and 1C, the sealing material 20 is more easily protected from ultraviolet rays. However, the light control film 1 may be sealed in the intermediate adhesive layer 330 with the sealing material 20 facing the first glass plate 310 side. The shielding layer 340 may be provided on a surface of the second glass plate 320 on the vehicle interior side.

The shielding layer 340 may be provided between the first glass plate 310 and the second glass plate 320. For example, a colored intermediate adhesive layer including a light-shielding film may be used as the intermediate adhesive layer 330. Alternatively, the shielding layer may be a colored film having a light-shielding property, or a combination of a colored intermediate adhesive layer and a colored ceramic layer.

Thus, at least one of the first glass plate 310, the second glass plate 320 and the layer between the first glass plate 310 and the second glass plate 320 includes the shielding layer 340 having a predetermined width from the outer edge of the laminated glass 300A in plan view. The shielding layer 340 preferably overlaps the outer edge 11o of a main surface of the light control laminate 10 on the first electrode sheet 11 side with respect to the light control layer 12 in plan view. Accordingly, the outer edge 11o of the first electrode sheet 11 can be hidden.

In a case where the laminated glass 300A includes the light control film 1C, the shielding layer 340 preferably overlaps the entire surface of the second extension portion 145 in plan view. Accordingly, the outer edge 11o of the first electrode sheet 11 can be hidden, and degradation of the sealing material 20 by ultraviolet rays can be suppressed. The shielding layer 340 more preferably overlaps the outer edge of a main surface of the light control laminate 10 on the first electrode sheet 11 side with respect to the light control layer 12 in plan view (that is, the outer edge 14o of the first ultraviolet absorption sheet). Accordingly, the outer edge 11o of the first electrode sheet 11 and the outer edge 14o of the first ultraviolet absorption sheet can be hidden, and degradation of the sealing material 20 by ultraviolet rays can be suppressed.

Here, the first glass plate 310, the second glass plate 320, and the intermediate adhesive layer 330 of the laminated glass 300 will be described in detail. The laminated glass 300A is similar to the laminated glass 300.

### [Glass Plate]

First glass plate 310 and second glass plate 320 may be inorganic glass or organic glass. The inorganic glass and the organic glass are usually colorless, but are only required to be transparent, and may be colored. The inorganic glass and the organic glass may be glass that absorbs ultraviolet or infrared rays.

As the inorganic glass, for example, soda-lime glass, aluminosilicate glass, borosilicate glass, alkali-free glass, and quartz glass are used without particular limitation. The first glass plate 310 located outside the laminated glass 300 is preferably inorganic glass from the viewpoint of scratch resistance, and is preferably soda-lime glass from the viewpoint of formability. In a case where the first glass plate 310 and the second glass plate 320 are soda-lime glass, clear glass, green glass containing a predetermined amount of an iron component, and UV-blocking green glass can be preferably used. At least one of the first glass plate 310 and the second glass plate 320 may be so-called privacy glass having a dark color such as gray color. Privacy glass is described in detail in, for example, International Patent Publication No. WO 2015/088026, the contents of which can be incorporated herein by reference.

The inorganic glass may be either untempered glass or tempered glass. The untempered glass is obtained by forming molten glass into a plate shape and slowly cooling the plate. The tempered glass is obtained by forming a compressive stress layer on a surface of untempered glass.

The tempered glass may be either physically tempered glass such as air-cooled tempered glass or chemically tempered glass. In the case of physically tempered glass, for example, a glass surface can be strengthened in a manner of generating the compressive stress layer on the glass surface by a temperature difference between the glass surface and the inside of the glass by an operation other than slow cooling, such as rapid cooling of the glass plate uniformly heated in bending from a temperature near a softening point.

In the case of chemically tempered glass, for example, the glass surface can be strengthened in a manner of generating a compressive stress on the glass surface by an ion exchange method or the like after bending.

On the other hand, examples of the material for the organic glass include polycarbonate, acrylic resins such as polymethyl methacrylate, and transparent resins such as polyvinyl chloride and polystyrene.

The method for forming the first glass plate 310 and the second glass plate 320 is not particularly limited. For example, in the case of inorganic glass, a glass plate formed by a float method or the like is preferred. The shapes of first glass plate 310 and second glass plate 320 are not limited to a rectangular shape or a trapezoidal shape, and may be shapes obtained by processing to various shapes and curvatures.

The thickness of the thinnest portion of the first glass plate 310 is preferably 1.1 mm or more and 3 mm or less. In a case where the thickness of the first glass plate 310 is 1.1 mm or more, a strength such as a tolerance to stone chips is sufficient, and in a case where the thickness is 3 mm or less, a mass of the laminated glass 300 does not become too large, which is preferred from the viewpoint of fuel consumption of the vehicle. The thickness of the thinnest portion of the first glass plate 310 is more preferably 1.8 mm or more and 2.8 mm or less, still more preferably 1.8 mm or more and 2.6 mm or less, still more preferably 1.8 mm or more and 2.2 mm or less, and still more preferably 1.8 mm or more and 2.0 mm or less.

The thickness of the second glass plate 320 is preferably 0.3 mm or more and 2.3 mm or less. In a case where the thickness of the second glass plate 320 is 0.3 mm or more, good handleability is exhibited, and in a case where the thickness is 2.3 mm or less, the mass does not become too large.

If the thickness of the second glass plate 320 is not appropriate, in particular, formation of two sheets of sharply curved glass as the first glass plate 310 and the second glass plate 320 leads to occurrence of a mismatch between the shapes of the two sheets, so that glass quality such as residual stress after pressure bonding is significantly affected.

However, by setting the thickness of the second glass plate 320 to 0.3 mm or more and 2.3 mm or less, glass quality such as residual stress can be maintained. Setting the thickness of the second glass plate 320 to 0.3 mm or more and 2.3 mm or less is particularly effective for maintaining glass quality for sharply curved glass. The thickness of the second glass plate 320 is more preferably 0.5 mm or more and 2.1 mm or less, and still more preferably 0.7 mm or more and 1.9 mm or less. Falling within this range leads to a similar but more remarkable effect.

Films having a water-repellent function, an ultraviolet- or infrared-blocking function, or films having low-reflection or low-emissivity characteristics may be provided on the outer side of the first glass plate 310 and/or the second glass plate 320. Films having ultraviolet- or infrared-blocking function, low-emissivity characteristics, visible light absorption, coloring and the like may be provided on the first glass plate 310 and/or the second glass plate 320 on the side of contact with the intermediate adhesive layer 330.

In a case where the first glass plate 310 and the second glass plate 320 are inorganic glass having a curved shape, the first glass plate 310 and the second glass plate 320 are bent after formation by a float method or the like and before bonding with the intermediate adhesive layer 330. The bending is performed by softening glass through heating. The temperature at which the glass is heated during the bending is preferably controlled within a range of about 550°C to 700°C. Gravity molding, press molding, roller molding, or the like may be used for bending the first glass plate 310 and the second glass plate 320.

### [Intermediate Adhesive Layer]

As the intermediate adhesive layer 330, a thermoplastic resin is commonly used, and examples thereof include thermoplastic resins that have been heretofore used in the relevant applications, such as plasticized polyvinyl acetal-based resins, plasticized polyvinyl chloride-based resins, saturated polyester-based resins, plasticized saturated polyester-based resins, polyurethane-based resins, plasticized polyurethane-based resins, ethylene-vinyl acetate copolymer-based resins, ethylene-ethyl acrylate copolymer-based resins, cycloolefin polymer resins, and ionomer resins. A resin composition containing a modified hydrogenated block copolymer described in Japanese Patent No. 6065221 can be preferably used.

Among the resins listed above, plasticized polyvinyl acetal-based resins are preferably used because they are excellent in balance of various properties such as transparency, weather resistance, strength, adhesive strength, penetration resistance, impact energy absorption, moisture resistance, heat shielding properties, and sound insulation properties. These thermoplastic resins may be used alone, or used in combination of two or more thereof. The term "plasticized" in the plasticized polyvinyl acetal-based resin refers to being plasticized by adding a plasticizer. The same applies to other plasticized resins.

However, in a case where a specific material is sealed in the intermediate adhesive layer 330, some types of materials sealed may be degraded by a specific plasticizer, and in this case, a resin substantially free of the plasticizer is preferably used. Examples of the resin free of a plasticizer include ethylene-vinyl acetate copolymer (EVA)-based resins.

Examples of the polyvinyl acetal-based resin include polyvinyl formal resins obtained by reacting polyvinyl alcohol (PVA) and formaldehyde, narrowly-defined polyvinyl acetal-based resins obtained by reacting PVA and acetaldehyde, and polyvinyl butyral (PVB) resins obtained by reacting PVA and n-butyraldehyde. In particular, PVB is preferred because it is excellent in balance of various properties such as transparency, weather resistance, strength, adhesive strength, penetration resistance, impact energy absorption, moisture resistance, heat shielding properties, and sound insulation properties. These polyvinyl acetal-based resins may be used alone, or used in combination of two or more thereof.

However, the material for forming the intermediate adhesive layer 330 is not limited to a thermoplastic resin. The intermediate adhesive layer 330 may contain functional particles such as an infrared absorber, an ultraviolet absorber, and a light emitting agent.

The intermediate adhesive layer 330 may include two or more layers. For example, in a case where the intermediate adhesive layer includes three or more layers, and the shear modulus of any of the layers excluding the outermost layers is made smaller than the shear modulus of the outermost layers by adjustment of a plasticizer or the like, the sound insulation properties of the laminated glass 300 can be improved. In this case, the shear moduli of the outermost layers may be the same or different.

The thickness of the thinnest portion of the intermediate adhesive layer 330 is preferably 0.5 mm or more. In a case where the intermediate adhesive layer 330 includes a plurality of layers, the thickness of the intermediate adhesive layer 330 is the total thickness of the respective layers. In a case where the thickness of the thinnest portion of the intermediate adhesive layer 330 is 0.5 mm or more, impact resistance required as laminated glass is sufficient. The thickness of the thickest portion of the intermediate adhesive layer 330 is preferably 3 mm or less. In a case where the maximum value of the thickness of the intermediate adhesive layer 330 is 3 mm or less, the mass of laminated glass does not become too large. The maximum value of the thickness of the intermediate adhesive layer 330 is more preferably 2.8 mm or less, and still more preferably 2.6 mm or less.

In a case where the intermediate adhesive layer 330 includes a plurality of layers, it is desirable that the layers included in the intermediate adhesive layer 330 be formed of the same material, but the layers may be formed of different materials. However, from the viewpoint of adhesiveness with the first glass plate 310 and the second glass plate 320, a functional material put into the laminated glass 300, and the like, it is desirable to use the above-described material for 50% or more of the thickness of the intermediate adhesive layer 330.

For producing the intermediate adhesive layer 330, for example, the resin material that forms the intermediate adhesive layer is appropriately selected, and extruded in a heated and melted state using an extruder. Extrusion conditions such as an extrusion speed of the extruder are set to be uniform. Thereafter, by, for example, extending the extruded resin film as necessary for the resin film to have a curvature in line with the design of the laminated glass, the intermediate adhesive layer 330 is completed.

### [Laminated Glass]

The total thickness of the laminated glass 300 is, for example, 1.9 mm or more and 10 mm or less, and preferably 2.8 mm or more and 10 mm or less. In a case where the total thickness of the laminated glass 300 is 2.8 mm or more, sufficient stiffness can be secured. In a case where the total thickness of the laminated glass 300 is 10 mm or less, sufficient transmittance is obtained and the haze can be reduced.

For producing the laminated glass 300, the first intermediate adhesive layer, the light control film 1 and the second intermediate adhesive layer are sandwiched between the first glass plate 310 and the second glass plate 320 to obtain a laminate. For example, the laminate is put into a rubber bag, a rubber chamber, a resin bag or the like, and preliminary pressure bonding is performed by applying heat while decompressing (degassing) the inside of the resin bag or the like. Specifically, for example, the laminate is bonded by controlling the temperature to be within a range of about 70°C to 110°C in vacuum where the gauge pressure is controlled to be within a range of -100 kPa to -65 kPa. The heating condition, the temperature condition and the lamination method are appropriately selected.

Further, by performing pressure bonding treatment in which heat and pressure are applied under the condition of controlling the temperature to be at 100°C to 150°C and controlling the absolute pressure to be at 0.6 MPa to 1.3 MPa, laminated glass 300 having better durability is obtained. However, in some cases, the heating and pressurization process is not used in consideration of simplification of the process, and characteristics of the material sealed in the laminated glass 300. The first intermediate adhesive layer and the second intermediate adhesive layer are integrated to form the intermediate adhesive layer 330.

A method called "cold bend" in which one or both of the first glass plate 310 and the second glass plate 320 are bonded in a state of being elastically deformed with respect to each other may be used. The cold bend can be achieved by using a laminate including the first glass plate 310, the first intermediate adhesive layer, the light control film 1, the second intermediate adhesive layer and the second glass plate 320 fixed by temporary fixing means such as a tape, and a conventionally known nip roller or rubber bag, a preliminary pressure bonding apparatus such as a rubber chamber, and an autoclave.

In addition to the intermediate adhesive layer 330, a film or a device having functions such as electrical heating, light emission, power generation, light control, a touch panel, decoration, polarization of light, reflection of light rays, scattering of light rays, and absorption of light rays may be provided between the first glass plate 310 and the second glass plate 320 as long as the effects of the present application are not impaired. The light rays herein may be any of infrared rays, visible light, and ultraviolet rays. The reflection of light rays is, for example, reflection of infrared, and the scattering of light rays is, for example, scattering of visible light. A film having functions such as antifogging, water repellency, heat shielding, and low-reflection may be provided on the surface of the laminated glass 300. A film having functions such as heat shielding and heat generation may be provided on the first surface of the first glass plate 310 or the fourth surface of the second glass plate 320.

Hereinafter, examples and comparative examples will be described, but the present invention is not limited to these examples. Examples 1 to 3 are examples, and Examples 4 and 5 are comparative examples.

### [Example 1]

In Example 1, first, a light control film having a structure shown in Fig. 2(b) was prepared. In the prepared light control film, the thickness T1 was 47 µm, and the maximum thickness Tₘₐₓ was 249 µm. A polymer dispersed liquid crystal was used for a light control layer of the light control film. Next, green glass having a thickness of 2.0 mm was prepared as a first glass plate and a second glass plate. Two clear intermediate adhesive layers having a thickness of 0.4 mm were prepared as an intermediate adhesive layer. Laminated glass in which a light control film was sealed in an intermediate adhesive layer was produced by the above-described method for producing laminated glass. A side of the light control film, which is free of a wiring portion, was used to perform evaluation that will be described later.

### [Example 2]

In Example 2, first, a light control film having a structure shown in Fig. 2(c) was prepared. In the prepared light control film, the thickness T1 was 110 µm, and the maximum thickness Tₘₐₓ was 255 µm. The width of the second extension portion was 1 mm. A polymer dispersed liquid crystal was used for a light control layer of the light control film. Next, laminated glass in which a light control film was sealed in an intermediate adhesive layer was produced in the same manner as in Example 1. A side of the light control film including a wiring portion was used to perform evaluation that will be described later.

### [Example 3]

In Example 3, first, a light control film having a structure shown in Fig. 2(c) was prepared. In the prepared light control film, the thickness T1 was 109 µm, and the maximum thickness Tₘₐₓ was 254 µm. The width of the second extension portion was 5 mm. A polymer dispersed liquid crystal was used for a light control layer of the light control film. Next, laminated glass in which a light control film was sealed in an intermediate adhesive layer was produced in the same manner as in Example 1. A side of the light control film including a wiring portion was used to perform evaluation that will be described later.

### [Example 4]

In Example 4, first, a light control film having a structure shown in Fig. 2(b) was prepared. In the prepared light control film, the thickness T1 was 38 µm, and the maximum thickness Tₘₐₓ was 183 µm. A polymer dispersed liquid crystal was used for a light control layer of the light control film. Next, laminated glass in which a light control film was sealed in an intermediate adhesive layer was produced in the same manner as in Example 1. A side of the light control film including a wiring portion was used to perform evaluation that will be described later.

### [Example 5]

In Example 5, first, a light control film having a structure shown in Fig. 2(b) was prepared. In the prepared light control film, the thickness T1 was 250 µm, and the maximum thickness Tₘₐₓ was 499 µm. A polymer dispersed liquid crystal was used for a light control layer of the light control film. Next, laminated glass in which a light control film was sealed in an intermediate adhesive layer was produced in the same manner as in Example 1. A side of the light control film, which is free of a wiring portion, was used to perform evaluation that will be described later.

### [Evaluation]

For the laminated glass of Examples 1 to 5, the sealing property and lamination compatibility were evaluated. In the evaluation of the sealing property, first, the laminated glass of Examples 1 to 5 was stored in an environment of 90°C for 1,000 hours. Thereafter, the laminated glass was visually observed in plan view, and the width of degradation in the light control film was measured. "Good" was assigned in a case where the width of degradation was 3 mm or less, and "poor" was assigned in a case where the width of degradation was larger than 3 mm. The polymer dispersed liquid crystal used as the light control layer is in a light-shielding state when no voltage is applied under normal conditions, and is in a light-transmitting state even when no voltage is applied in a degraded state. Thus, the width of a region that is in a light-transmitting state when no voltage is applied in the light control film in plan view was defined as a width of degradation.

In the evaluation of lamination compatibility, air bubbles present in the intermediate adhesive layer were visually confirmed before the laminated glass of Examples 1 to 5 was stored in an environment at 90°C. In a case where one or more air bubbles having a diameter of 0.5 mm or more were generated, or three or more air bubbles having a diameter of less than 0.5 mm were generated, it was determined that degassing failure occurred, and "poor" was assigned. In a case where one or two air bubbles having a diameter of less than 0.5 mm were generated, it was determined that degassing failure occurred, but was acceptable, and "good" was assigned. In other cases, it was determined that degassing failure did not occur, and "excellent" was assigned.

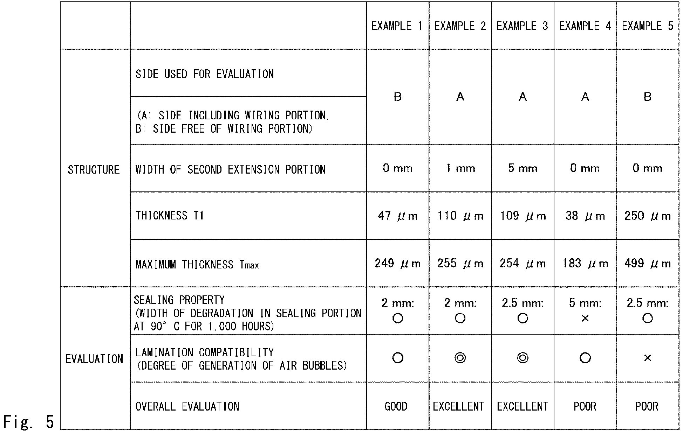

The results of evaluation of the sealing property and lamination compatibility are shown in Fig. 5. The values of the thickness T1 and the maximum thickness Tₘₐₓ are shown in Fig. 5. In a case where "good" was assigned for the sealing property and "excellent" was assigned for the lamination compatibility, "excellent" was assigned in overall evaluation. In a case where "good" was assigned for the sealing property and "good" was assigned for the lamination compatibility, "good" was assigned in overall evaluation. In a case where "poor" was assigned for the sealing property or the lamination compatibility, "poor" was assigned.

It was found that a good sealing property was obtained when the thickness T1 was 40 µm or more in both cases where a side including a wiring portion was used for evaluation and where a side free of a wiring portion was used for evaluation as shown in Fig. 5. On the other hand, it was found that a thickness T1 of more than 240 µm led to poor lamination compatibility due to occurrence of degassing failure even when a good sealing property was obtained.

While the preferred embodiments and the like have been described in detail above, the present invention is not limited to the embodiments and the like, and various modifications and substitutions can be made to the embodiments and the like without departing from the scope described in claims.

In addition to the embodiments, the following supplementary notes are further disclosed.

### (Supplementary Note 1)

A light control film including
a light control laminate including a first electrode sheet, a light control layer and a second electrode sheet in this order, and
a sealing material at an outer edge portion of the light control laminate, in which
the light control laminate includes a first extension portion in which the second electrode sheet is located outside an outer edge of the light control layer in plan view, a surface of the second electrode sheet on a side of the light control layer at the first extension portion is a first main surface,
the sealing material contacts at least a side surface of the first electrode sheet, a side surface of the light control layer and a first main surface of the second electrode sheet at the first extension portion and a periphery of the first extension portion, and has a thickness T1 to the light control laminate from a surface of the sealing material, which includes a location farthest from the light control laminate, at a location overlapping an outer edge of the first electrode sheet in plan view, and
the thickness T1 is 40 µm or more.

### (Supplementary Note 2)

The light control film according to supplementary note 1, in which
the light control laminate includes a first ultraviolet absorption sheet on the first electrode sheet on a side opposite to the light control layer,
the first ultraviolet absorption sheet includes a protective substrate and a pressure sensitive adhesive layer,
at least one of the pressure sensitive adhesive layer and the protective substrate contains an ultraviolet absorber, and
the pressure sensitive adhesive layer bonds the protective substrate and the first electrode sheet.

### (Supplementary Note 3)

The light control film according to supplementary note 2, in which the light control laminate includes a second ultraviolet absorption sheet on the second electrode sheet on a side opposite to the light control layer.

### (Supplementary Note 4)

The light control film according to supplementary note 2 or 3, in which
the light control laminate includes a second extension portion in which the first ultraviolet absorption sheet is located inside an outer edge of the first electrode sheet in plan view, a surface of the first electrode sheet on a side opposite to the light control layer at the second extension portion is a second main surface, and
the sealing material contacts the second main surface of the first electrode sheet.

### (Supplementary Note 5)

The light control film according to supplementary note 4, in which
the light control laminate includes a wiring portion in which wiring is electrically connected to at least one of the first electrode sheet and the second electrode sheet, and
the second extension portion is provided on, among sides of the light control laminate, a side including the wiring portion.

### (Supplementary Note 6)

The light control film according to supplementary note 4 or 5, in which at the second extension portion, a width of a region where the sealing material overlaps the second main surface of the first electrode sheet in plan view is 1 mm or more.

### (Supplementary Note 7)

The light control film according to any one of supplementary notes 1 to 6, in which the thickness T1 is 240 µm or less.

### (Supplementary Note 8)

The light control film according to any one of supplementary notes 1 to 7, in which
the sealing material has a maximum thickness Tₘₐₓ with respect to the first main surface of the second electrode sheet, and
the Tₘₐₓ is 185 µm or more and 495 µm or less.

### (Supplementary Note 9)

The light control film according to any one of supplementary notes 1 to 8, in which the light control layer contains at least one selected from the group consisting of a suspended particle device, a polymer dispersed liquid crystal, a polymer network liquid crystal, a guest-host liquid crystal, a photochromic device, an electrochromic device, and an electrokinetic device.

### (Supplementary Note 10)

Laminated glass including a first glass plate, an intermediate adhesive layer, and a second glass plate in this order,
the laminated glass including the light control film according to any one of supplementary notes 1 to 9 in the intermediate adhesive layer.

### (Supplementary Note 11)

The laminated glass according to supplementary note 10, in which the intermediate adhesive layer contains at least one resin selected from the group consisting of a polyvinyl acetal-based resin, a polyvinyl chloride-based resin, a saturated polyester-based resin, a polyurethane-based resin, an ethylene-vinyl acetate copolymer-based resin, an ethylene-ethyl acrylate copolymer-based resin, and a cycloolefin polymer resin.

### (Supplementary Note 12)

The laminated glass according to supplementary note 11, in which the intermediate adhesive layer contains a plasticizer.

### (Supplementary Note 13)

The laminated glass according to any one of supplementary notes 10 to 12, in which
at least one of the first glass plate, the second glass plate and the layer between the first glass plate and the second glass plate includes a shielding layer having a predetermined width from an outer edge of the laminated glass in plan view, and
the shielding layer overlaps an outer edge of a first main surface of the light control laminate on a side of the first electrode sheet with respect to the light control layer in plan view.

The present international application claims priority based on Japanese Patent Application No. 2023-176828 filed on October 12, 2023, and the entire contents of Japanese Patent Application No. 2023-176828 are incorporated herein by reference.

### Reference Signs List

- 1: LIGHT CONTROL FILM
- 10, 10A, 10B, 10C: LIGHT CONTROL LAMINATE
- 11: FIRST ELECTRODE SHEET
- 11a: MAIN SURFACE
- 11c: SIDE SURFACE
- 11o: OUTER EDGE
- 12: LIGHT CONTROL LAYER
- 12c: SIDE SURFACE
- 13: SECOND ELECTRODE SHEET
- 13a, 13b: MAIN SURFACE
- 14: FIRST ULTRAVIOLET ABSORPTION SHEET
- 14a: MAIN SURFACE
- 14c: SIDE SURFACE
- 15: SECOND ULTRAVIOLET ABSORPTION SHEET
- 19: WIRING
- 20: SEALING MATERIAL
- 20i: INNER EDGE
- 20o: OUTER EDGE
- 111: FIRST SUBSTRATE
- 112: FIRST CONDUCTIVE FILM
- 131: SECOND SUBSTRATE
- 132: SECOND CONDUCTIVE FILM
- 135: FIRST EXTENSION PORTION
- 141: PROTECTIVE SUBSTRATE
- 142: PRESSURE SENSITIVE ADHESIVE LAYER
- 145: SECOND EXTENSION PORTION
- 151: PROTECTIVE SUBSTRATE
- 152: PRESSURE SENSITIVE ADHESIVE LAYER
- 191: WIRING PORTION
- 300, 300A: LAMINATED GLASS
- 310: FIRST GLASS PLATE
- 320: SECOND GLASS PLATE
- 330: INTERMEDIATE ADHESIVE LAYER
- 340: SHIELDING LAYER

## Claims

1. A light control film comprising:
a light control laminate including a first electrode sheet, a light control layer and a second electrode sheet in this order; and
a sealing material at an outer edge portion of the light control laminate, wherein
the light control laminate includes a first extension portion in which the second electrode sheet is located outside an outer edge of the light control layer in plan view, a surface of the second electrode sheet on a side of the light control layer at the first extension portion is a first main surface,
the sealing material contacts at least a side surface of the first electrode sheet, a side surface of the light control layer and a first main surface of the second electrode sheet at the first extension portion and a periphery of the first extension portion, and has a thickness T1 to the light control laminate from a surface of the sealing material, which includes a location farthest from the light control laminate, at a location overlapping an outer edge of the first electrode sheet in plan view, and
the thickness T1 is 40 µm or more.

2. The light control film according to claim 1, wherein
the light control laminate includes a first ultraviolet absorption sheet on the first electrode sheet on a side opposite to the light control layer,
the first ultraviolet absorption sheet includes a protective substrate and a pressure sensitive adhesive layer,
at least one of the pressure sensitive adhesive layer and the protective substrate contains an ultraviolet absorber, and
the pressure sensitive adhesive layer bonds the protective substrate and the first electrode sheet.

3. The light control film according to claim 2, wherein the light control laminate includes a second ultraviolet absorption sheet on the second electrode sheet on a side opposite to the light control layer.

4. The light control film according to claim 2, wherein
the light control laminate includes a second extension portion in which the first ultraviolet absorption sheet is located inside an outer edge of the first electrode sheet in plan view, a surface of the first electrode sheet on a side opposite to the light control layer at the second extension portion is a second main surface, and
the sealing material contacts the second main surface of the first electrode sheet.

5. The light control film according to claim 4, wherein
the light control laminate includes a wiring portion in which wiring is electrically connected to at least one of the first electrode sheet and the second electrode sheet, and
the second extension portion is provided on, among sides of the light control laminate, a side including the wiring portion.

6. The light control film according to claim 4, wherein at the second extension portion, a width of a region where the sealing material overlaps the second main surface of the first electrode sheet in plan view is 1 mm or more.

7. The light control film according to any one of claims 1 to 6, wherein the thickness T1 is 240 µm or less.

8. The light control film according to any one of claims 1 to 6, wherein
the sealing material has a maximum thickness Tₘₐₓ with respect to the first main surface of the second electrode sheet, and
the Tₘₐₓ is 185 µm or more and 495 µm or less.

9. The light control film according to any one of claims 1 to 6, wherein the light control layer contains at least one selected from the group consisting of a suspended particle device, a polymer dispersed liquid crystal, a polymer network liquid crystal, a guest-host liquid crystal, a photochromic device, an electrochromic device, and an electrokinetic device.

10. Laminated glass comprising a first glass plate, an intermediate adhesive layer, and a second glass plate in this order,
the laminated glass comprising the light control film according to any one of claims 1 to 6 in the intermediate adhesive layer.

11. The laminated glass according to claim 10, wherein the intermediate adhesive layer contains at least one resin selected from the group consisting of a polyvinyl acetal-based resin, a polyvinyl chloride-based resin, a saturated polyester-based resin, a polyurethane-based resin, an ethylene-vinyl acetate copolymer-based resin, an ethylene-ethyl acrylate copolymer-based resin, and a cycloolefin polymer resin.

12. The laminated glass according to claim 11, wherein the intermediate adhesive layer contains a plasticizer.

13. The laminated glass according to claim 10, wherein
at least one of the first glass plate, the second glass plate and the layer between the first glass plate and the second glass plate includes a shielding layer having a predetermined width from an outer edge of the laminated glass in plan view, and
the shielding layer overlaps an outer edge of a first main surface of the light control laminate on a side of the first electrode sheet with respect to the light control layer in plan view.
